# EUROPÄISCHE PATENTSCHRIFT

(11) **EP 3 518 816 B1**
(45) Veröffentlichungstag und Bekanntmachung des Hinweises auf die Patenterteilung: **16.02.2022**
(21) Anmeldenummer: 17768709.2
(22) Anmeldetag: 05.09.2017
(51) Int. Cl.: A61C 8/00, A61C 13/265

(54) **KAPPE ZUR BEFESTIGUNG AUF EINEM VERANKERUNGSELEMENT**
CAP FOR FASTENING ON AN ANCHORING ELEMENT
CAPUCHON À FIXER SUR UN ÉLÉMENT D'ANCRAGE

(30) Priorität: 30.09.2016 DE 102016118668
(43) Veröffentlichungstag der Anmeldung: 07.08.2019
(73) Patentinhaber: Bredent GmbH & Co. KG, 89250 Senden (DE)
(72) Erfinder: BÖHM, Wilfried, 89250 Senden (DE); BREHM, Peter, 89250 Senden (DE)
(74) Vertreter: Baur & Weber Patentanwälte PartG mbB
(86) Internationale Anmeldenummer: PCT/EP2017/072160
(87) Internationale Veröffentlichungsnummer: WO 2018/059880

(56) Entgegenhaltungen:
- EP-A1- 0 867 154
- DE-A1- 19 901 529
- DE-U1-202012 011 951
- DE-U1-202015 001 762
- KR-B1- 101 489 950
- US-B1- 9 033 709

## Beschreibung

Die Erfindung betrifft eine Kappe-Verankerungselement-Anordnung zur Befestigung von Zahnersatz auf einem Verankerungselement.

Zur Fixierung einer Zahnprothese oder Schiene an Implantaten oder Wurzelstiften werden zum Ersatz eines oder mehrerer Zähne herausnehmbare Zahnprothesen eingesetzt. Herausnehmbarer Zahnersatz wird oftmals in Form einer sogenannten Doppelkrone bereit gestellt, die einen konusförmigen kieferseitigen Teil und einen entsprechenden Gegenkonus am Zahnersatz aufweist, die mit einem geringen Öffnungswinkel ähnlich eines Morsekegels eine entsprechende lösbare Verbindung eingehen. Für industrielle Fertigung ist eine derartige Doppelkrone jedoch aufgrund der erforderlichen Toleranzen ungeeignet. Bei anderen Systemen werden sogenannte Kugelköpfe bereitgestellt, die auch als Patrizen bezeichnet werden. Dentalprothesen, die einen zum Kugelkopf passenden Hohlraum besitzen, werden auf diese Kugelköpfe aufgesteckt, wobei der den Patrizen zugewandte Teil der Dentalprothese üblicherweise als Matrize bezeichnet wird. Der Hohlraum in der Prothese ist zum Zweck des Aufsteckens häufig mit einem elastischen Material ausgekleidet, welches für ausreichende Abzugskräfte zwischen dem Kugelkopf und der Prothese sorgt. Für den Patienten oder den Zahnarzt besteht somit die Möglichkeit, die Dentalprothese zu Anpassungs- oder Reinigungszwecken zu entnehmen.

Aus der DE 103 20 474 A1 ist ein Verbindungselement zwischen abnehmbaren Zahnersatz und zahnärztlichen Implantaten bzw. natürlichen Zähnen oder Zahnwurzeln mit einem sogenannten Pollerprofil bekannt, das zur Retention des Zahnersatzes an den Implantaten oder Zähnen dient. Dabei besteht das Verbindungselement aus einem konischen Primärteil aus metallischem oder keramischem Werkstoff und ist fest mit dem Implantat oder Zahn verbunden. Desweiteren weist das Verbindungselement einen unter sich gehenden Bereich auf, wodurch in Verbindung mit dem Sekundärteil, das aus weich bleibendem Kunststoff besteht, eine Führung und Retention des abnehmbaren Zahnersatzes erzielt wird.

Aus der DE 199 45 354 C2 ist eine implantatgetragene Zahnprothese bekannt, die in ihrem Grundkörper mehrere Basisausnehmungen aufweist, in denen jeweils eine Konuskappe in selbsthärtendem Kunststoff eingebettet ist. Jede Konuskappe besitzt auf einem Konuszapfen eines Aufbaupfostens, der in eine Konusbohrung eines enossalen Implantats eingesetzt ist. Für die Herstellung der Zahnprothese werden ausschließlich vorgefertigte Teile verwendet. Das Einbetten der Konuskappen in den Grundkörper der Zahnprothese erfolgt in einer einzigen Sitzung in der zahnärztlichen Praxis, wonach die Zahnprothese fertig gestellt ist.

Aus der EP 0 707 835 A1 ist eine mechanische Verbindung eines zweiphasigen Zahnimplantats bekannt, das aus zwei Komponenten besteht, die mittels eines in eine Konushülle ragenden Konuszapfens verbunden sind, wobei die Konuspaarung im Bereich der Selbsthemmung ausgelegt ist und der Konuszapfen von einer zentral verlaufenden, verjüngten Zugschraube durchdrungen wird, die die Konuspaarung gegeneinander verspannt.

Aus der EP 1 086 662 B1 ist eine implantatgetragene Zahnprothese mit mehreren jeweils in einer Aufnahmebohrung eines enossalen Implantats aufgenommenen Aufbaupfosten bekannt, die jeweils einen okklusalen Konuszapfen zur Verbindung mit der Zahnprothese aufweisen. Desweiteren weist die Zahnprothese in den Basalausnehmungen des Grundkörpers der Zahnprothese eingebettete Konuskappen auf, die jeweils eine in ihrer Form an den zugeordneten Konuszapfen angepasste Konusbohrung aufweisen. Jede Konuskappe ragt in eine Basalausnehmung, die allseitig größer als die aufzunehmende Konuskappe und mit einer seitlichen Füllöffnung versehen ist.

Aus der US 5,556,280 ist eine Vorrichtung zur lösbaren Befestigung von Zahnersatz im Mund eines Patienten bekannt. Ein Abutment weist eine sich verjüngende Stützfläche auf, die von der Befestigungsfläche abgewandt ist. Die sich verjüngende Stützfläche ist so ausgebildet, dass sie mit einer korrespondierenden Fläche eines Zahnersatzes zusammengefügt werden kann, um gemeinsam eine Befestigung für den Zahnersatz zu bilden, so dass der Zahnersatz nicht mittels Klebeflächen befestigt werden muss.

Aus der WO 2004/004 594 A1 ist eine zahnprothetische Anordnung bekannt, die ein Abutment zum Anbringen an einer Zahnwurzel, einem Implantat, Nachbarzahn oder Schiene aufweist, und ein Retentionselement zur gelenkigen Befestigung in einer Kappe umfasst, das die zahnprothetische Anordnung sichert. Eine Randleiste ragt aus einem Ende der Kappe hervor, um eine lösbare Schnappverbindung über eine äußere Befestigungsfläche des Abutments zu schaffen. Die äußere Befestigungsfläche weist wenigstens zwei axial benachbarte Retentionsflächen auf, die ineinandergreifen und die Schnappbefestigung mit der korrespondierenden inneren Fläche der Kappe bereitstellen.

Die DE 20 2012 011 951 U1 zeigt ein dentales Verankerungselement zur Befestigung eines abnehmbaren Zahnersatzes bzw. einer zahntechnischen Arbeit an einem Zahnimplantat oder einer Zahnwurzel, mit einem fest mit dem Implantat bzw. der Zahnwurzel verbundenen, vorzugsweise in der Art eines Abutments ausgebildeten Anschlußteils, das einen mit einem radial vorstehenden Retentionsvorsprung versehenen Patrizenkörper trägt, ferner mit einem an den Patrizenkörper angepassten Matrizenteil, das mit dem Zahnersatz verbunden ist. Es ist ein temporär einzusetzendes Element vorgesehen, bei welchem das Matrizenteil weichelastisch ausgebildet ist und den über die Gingiva vorstehenden Teil des Patrizenkörpers zumindest nahezu vollständig formschlüssig umschließt, wobei das Matrizenteil von einer hart ausgebildeten Kappe umschlossen ist, die fest in den Zahnersatz eingebettet ist.

Die vorgenannten Systeme erlauben es, herausnehmbaren Zahnersatz zu schaffen, der zu Anpassungs- oder Reinigungszwecken vom Zahnarzt oder vom Benutzer entnommen werden kann. Es besteht jedoch in der Technik Bedarf, lösbare Befestigungsmöglichkeiten zu schaffen, die einfach und kostengünstig herstellbar sind, wobei jedoch die Haltekraft entsprechend anpassbar ist.

Es ist daher Aufgabe der Erfindung, Befestigungsmöglichkeiten für herausnehmbaren Zahnersatz zu schaffen, der besonders einfach ausgebildet ist, aber dennoch eine sichere Befestigung der Zahnprothesen bei gleichzeitiger Abstimmbarkeit der Abzugskräfte ermöglicht.

Diese Aufgabe wird durch die Merkmale des unabhängigen Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung ist vorgesehen eine Kappe-Verankerungselement-Anordnung mit einem Verankerungselement, auf dem eine umlaufenden Nut ist, einer Kappe zur Befestigung von Zahnersatz auf dem Verankerungselement, die einen radial nach innen gerichteten Vorsprung und einen konusförmigen Abschluss aufweist, und einer Matrize, die aus einem federnd elastisch deformierbaren Material gefertigt ist und in der Kappe nur oberhalb des konusförmigen Abschluss angeordnet ist. Der Vorsprung wirkt mit der umlaufenden Nut auf dem Verankerungselement als Retentionselement zusammen, so dass die Kappe mittels der Matrize auf dem Verankerungselement lösbar befestigbar ist oder befestigt ist, und wobei der unterhalb des Retentionselements angeordnete konusförmige Abschluss im befestigten Zustand eine korrespondierende Außenfläche des Verankerungselements wenigstens teilweise umschließt.

Demnach wird eine Kappe-Verankerungselement-Anordnung mit einer Kappe beschrieben, die als Träger für eine Zahnprothese fungieren kann. Die Kappe weist in ihrem oberen Bereich einen Retentionsbereich auf, dessen Gestaltung für eine abstimmbare Abzugskraft sorgt. Unterhalb des Retentionsbereichs geht die Kappe in einen Abschluss über, der entsprechende Außenflächen am Verankerungselement bedecken kann, so dass im befestigten Zustand ein sicherer Halt gegen Verkippung durch das Umschließen des Abschlusses auf Außenflächen des Verankerungselements gegeben ist. Des Weiteren weist das Verankerungselement eine Hinterschneidung in Form einer Nut auf, die mit einem nach innen gerichteten Vorsprung zusammenwirkt, so dass zusammen mit der Matrize ein fester Halt der Kappe auf dem Verankerungselement ermöglicht wird. Die erfindungsgemäße Kappe stellt somit die gewünschte Haltekraft mit einem Retentionselement bereit, welches industriell ohne größeren Aufwand herstellbar ist, wobei gleichzeitig über die Abstützung am konusförmigen Abschluss zusätzlich eine deutliche Verbesserung bezüglich Kippstabilität erreicht wird. Die erfindungsgemäße Kappe vereint somit die Vorteile bezüglich Haltefähigkeit eines Retentionselements mit der Kippstabilität einer klassischen Doppelkrone, ohne jedoch deren individuelle Nachteile aufzuweisen.

Die Kappe ist auf dem Verankerungselement mittels einer aus einem federnd elastischen Material gefertigten Matrize lösbar befestigt. Als elastisch deformierbares Material kann beispielsweise Kunststoff verwendet werden. Kunststoff -Matrizen sind in der Dentaltechnik weit verbreitet und erlauben einen sicheren und zuverlässigen Halt der Kappe auf dem Verankerungselement.

Gemäß einer weiteren Ausführungsform der Erfindung ist der Abschluss in Form eines Kegelstumpfs ausgebildet Die Verwendung eines Kegelstumpfs ermöglicht eine rotationssymmetrische Fertigung der Kappe, so dass diese besonders einfach aufgebaut ist.

Gemäß der Erfindung weist das Verankerungselement eine umlaufende Nut auf, die mit einem an der Kappe angeordneten Vorsprung zusammen wirkt.

Gemäß einer weiteren Ausführungsform der Erfindung sind der radial nach innen gerichtete Vorsprung und die umlaufenden Nut bezüglich ihrer Abmessungen an eine Abzugskraft angepasst.

Dabei können der nach innen gerichtete Vorsprung und die umlaufende Nut entsprechend dimensioniert werden, so dass die zum Abziehen der Kappe vom Verankerungselement aufzubringende Abzugskraft entsprechend auf die Bedürfnisse der Dentalrestauration abgestimmt werden kann.

Die Außenseite der Kappe kann in Form eines Pollers ausgebildet sein.

Eine derartige Ausgestaltung der Kappe ermöglicht einen festen Sitz des Zahnersatzes auf der Kappe.

Die Kappe kann dabei aus Metall oder Kunststoff gefertigt sein, wobei andere Werkstoffe nicht ausgeschlossen sind.

Üblicherweise wird das Verankerungselement als Teil eines Implantats oder Wurzelstifts bereit gestellt. Demnach kann die erfindungsgemäße Kappe in vielen Anwendungsfällen eingesetzt werden, wobei auch ein Zusammenwirken mit bereits bestehenden Implantaten oder Wurzelstiften möglich ist.

Die Erfindung wird nachfolgend unter Bezugnahme auf die Zeichnung näher erläutert. Es zeigt:

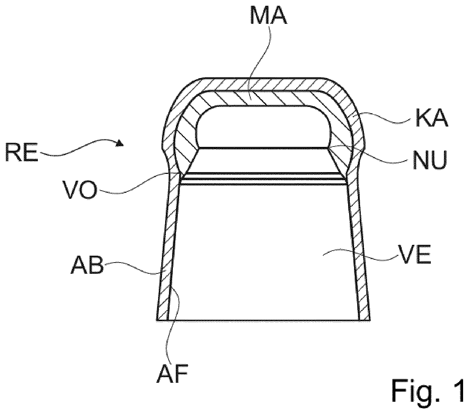

- Fig. 1: eine erfindungsgemäße Kappe in einer Seitenansicht in einem befestigten Zustand.

In den Figuren sind gleiche oder gleich wirkende Elemente mit den gleichen Bezugszeichen versehen.

In Fig. 1 ist eine Ausführungsform einer erfindungsgemäßen Kappe KA gezeigt. Die Kappe KA wird auf einem Verankerungselement VE befestigt, wobei als Retentionselement RE ein nach innen gerichteter Vorsprung VO an der Kappe KA mit einer Nut NU am Verankerungselement VE zusammen wirkt. Zwischen Kappe KA und Verankerungselement VE ist eine aus elastisch deformierbarem Material, typischerweise einem Kunststoffmaterial, gefertigte Matrize MA angebracht. Unterhalb des Retentionselements RE weist die Kappe KA einen konusförmigen Abschluss AB auf, der im befestigten Zustand eine korrespondierende Außenfläche AF des Verankerungselements VE überdeckt.

Somit wird im befestigten Zustand, der in Fig. 1 dargestellt ist, die Kappe sowohl im Retentionselement RE gehalten als auch über das Zusammenwirken von konusförmigem Abschluss AB und korrespondierender Außenfläche AF zusätzlich gegen Verkippung stabilisiert. Die Außenseite der Kappe KA kann dabei in Form eines Pollers ausgebildet sein, wobei die bei Pollern typische Einschnürung auf einfache Weise im Bereich des nach innen gerichteten Vorsprungs VO gebildet sein kann. Neben einem konusförmigem Abschluss AB wäre es auch möglich, an dieser Stelle eine zylinderförmige Geometrie vorzusehen.

Die Kappe KA ist als Befestigung für Zahnersatz vorgesehen (nicht in Fig. 1 gezeigt), so dass eine lösbare Verbindung mit dem Verankerungselement VE geschaffen wird, wie es bei herausnehmbaren Zahnersatz erwünscht ist. Durch die Dimensionierung des Vorsprungs VO und dessen Zusammenspiel mit der Nut NU bzw. durch die Wahl des Matrizenmaterials MA lässt sich die Abzugskraft abstimmen, so dass unterschiedliche Werte erreicht werden können. Die Kappe KA zur Befestigung von Zahnersatz ist in Fig. 1 in einem befestigten Zustand auf dem Verankerungselement Zustand gezeigt. Hierbei sollte betont werden, dass die Kappe KA in axiale Richtung nach oben abziehbar ist. Das Verankerungselement VE kann dabei Teil eines Implantats oder eines Wurzelstifts ein. Für die Kappe KA wird typischerweise Metall oder Kunststoff als Herstellungsmaterial gewählt. Vorteilhafterweise ist die Kappe KA entlang der axialen Richtung des Verankerungselements VE rotationssymmetrisch ausgebildet. Die in Fig. 1 gezeigte Kappe KA kann jedoch auch Teil einer zahnprothetischen Anordnung sein und würde in diesem Fall eine Innenfläche der Zahnprothese bilden.

Aufgrund des einfachen Aufbaus ermöglicht die Kappe KA eine kostengünstige Befestigungsmöglichkeit für Zahnersatz, wobei eine zuverlässige Befestigung mittels des Retentionsbereichs RE und eine Sicherung gegen Verkippung über die korrespondierenden Flächen der kegelstumpfförmigen Überlagerung von Kappe KA und Verankerungselement VE im Bereich des Abschlusses AB erreicht werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern durch die folgenden Ansprüche definiert.

## Patentansprüche

1. Kappe-Verankerungselement-Anordnung mit
- einem Verankerungselement (VE), auf dem eine umlaufenden Nut (NU) ist,
- einer Kappe (KA) zur Befestigung von Zahnersatz auf dem Verankerungselement (VE), die einen radial nach innen gerichteten Vorsprung (VO) und einen konusförmigen Abschluss (AB) aufweist, und
- einer Matrize (MA), die aus einem federnd elastisch deformierbaren Material gefertigt ist und in der Kappe (KA) nur oberhalb des konusförmigen Abschluss (AB) angeordnet ist,
- wobei der Vorsprung (VO) mit der umlaufenden Nut (NU) auf dem Verankerungselement (VE) als Retentionselement (RE) zusammenwirkt, so dass die Kappe (KA) mittels der Matrize (MA) auf dem Verankerungselement (VE) lösbar befestigbar ist oder befestigt ist, und wobei der unterhalb des Retentionselements (RE) angeordnete konusförmige Abschluss (AB) im befestigten Zustand eine korrespondierende Außenfläche (AF) des Verankerungselements (VE) wenigstens teilweise umschließt.

2. Kappe-Verankerungselement-Anordnung nach Anspruch 1, bei der die Matrize (MA) aus Kunststoff ist.

3. Kappe-Verankerungselement-Anordnung nach Anspruch 1 oder 2, bei der der Abschluss (AB) in Form eines Kegelstumpfs ausgebildet ist.

4. Kappe-Verankerungselement-Anordnung nach einem der Ansprüche 1 bis 3, bei der die Außenseite der Kappe (KA) in Form eines Pollers ausgebildet ist.

5. Kappe-Verankerungselement-Anordnung nach einem der Ansprüche 1 bis 4, die entlang einer axialen Richtung rotationssymmetrisch ist.

6. Kappe-Verankerungselement-Anordnung nach einem der Ansprüche 1 bis 5, bei der der radial nach innen gerichtete Vorsprung (VO) und die umlaufenden Nut (NU) bezüglich ihrer Abmessungen an eine Abzugskraft angepasst sind.

7. Kappe-Verankerungselement-Anordnung nach einem der Ansprüche 1 bis 6, wobei die Kappe (KA) aus Metall oder Kunststoff gefertigt ist.

8. Kappe-Verankerungselement-Anordnung nach einem der Ansprüche 1 bis 7, wobei das Verankerungselement (VE) Teil eines Implantats oder Wurzelstifts ist.

## Claims

1. Cap anchoring element arrangement comprising
- an anchoring element (VE) on which there is a circumferential groove (NU),
- a cap (KA) for fastening dentures on the anchoring element (VE), which cap has a projection (VO) facing radially inwards and a conical end (AB), and
- a die (MA) which is made of a resiliently elastic deformable material and is arranged in the cap (KA) only above the conical end (AB),
- wherein the projection (VO) interacts with the circumferential groove (NU) on the anchoring element (VE) as a retention element (RE) so that the cap (KA) can be or is releasably fastened to the anchoring element (VE) by means of the die (MA), and wherein, in the fastened state, the conical end (AB) arranged below the retention element (RE) at least partially encloses a corresponding outer surface (AF) of the anchoring element (VE).

2. Cap anchoring element arrangement according to claim 1, wherein the die (MA) is made of plastics material.

3. Cap anchoring element arrangement according to either claim 1 or claim 2, wherein the end (AB) is designed in the form of a truncated cone.

4. Cap anchoring element arrangement according to any of claims 1 to 3, wherein the outside of the cap (KA) is designed in the form of a bollard.

5. Cap anchoring element arrangement according to any of claims 1 to 4, which is rotationally symmetrical along an axial direction.

6. Cap anchoring element arrangement according to any of claims 1 to 5, wherein the projection (VO) facing radially inwards and the circumferential groove (NU) are adapted to a pull-off force with regard to their dimensions.

7. Cap anchoring element arrangement according to any of claims 1 to 6, wherein the cap (KA) is made of metal or plastics material.

8. Cap anchoring element arrangement according to any of claims 1 to 7, wherein the anchoring element (VE) is part of an implant or a root pin.

## Revendications

1. Agencement d'éléments d'ancrage de capuchon comportant
- un élément d'ancrage (VE) sur lequel se trouve une rainure circonférentielle (NU),
- un capuchon (KA) pour la fixation d'une prothèse dentaire sur l'élément d'ancrage (VE), lequel capuchon présente une saillie (VO) dirigée radialement vers l'intérieur et une extrémité conique (AB), et
- une matrice (MA) qui est constituée d'un matériau souple déformable élastiquement et est disposée dans le capuchon (KA) uniquement au-dessus de l'extrémité conique (AB),
- dans lequel la saillie (VO) coopère avec la rainure circonférentielle (NU) en tant qu'élément de retenue (RE) sur l'élément d'ancrage (VE), de sorte que le capuchon (KA) peut être fixé ou est fixé de manière amovible sur l'élément d'ancrage (VE) au moyen de la matrice (MA), et dans lequel l'extrémité conique (AB) disposée en dessous de l'élément de retenue (RE), à l'état fixé, enferme au moins partiellement une surface extérieure (AF) correspondante de l'élément d'ancrage (VE).

2. Agencement d'éléments d'ancrage de capuchon selon la revendication 1, dans lequel la matrice (MA) est en matière plastique.

3. Agencement d'éléments d'ancrage de capuchon selon la revendication 1 ou 2, dans lequel l'extrémité (AB) est conçue sous la forme d'un tronc de cône.

4. Agencement d'éléments d'ancrage de capuchon selon l'une des revendications 1 à 3, dans lequel la face extérieure du capuchon (KA) est réalisée sous la forme d'une borne.

5. Agencement d'éléments d'ancrage de capuchon selon l'une des revendications 1 à 4, lequel est à symétrie de révolution le long d'une direction axiale.

6. Agencement d'éléments d'ancrage de capuchon selon l'une des revendications 1 à 5, dans lequel les dimensions de la saillie (VO) dirigée radialement vers l'intérieur et de la rainure circonférentielle (NU) sont adaptées à une force d'extraction.

7. Agencement d'éléments d'ancrage de capuchon selon l'une des revendications 1 à 6, dans lequel le capuchon (KA) est fabriqué à partir de métal ou de matière plastique.

8. Agencement d'éléments d'ancrage de capuchon selon l'une des revendications 1 à 7, dans lequel l'élément d'ancrage (VE) fait partie d'un implant ou d'un tenon radiculaire.
